# FASCICULE DE BREVET EUROPEEN

(11) **EP 0 477 097 B1**
(45) Date de publication et mention de la délivrance du brevet: **01.03.1995**
(21) Numéro de dépôt: 91402486.4
(22) Date de dépôt: 18.09.1991
(51) Int. Cl.: G21C 7/08

(54) **Dispositif de guidage de grappe de contrôle de réacteur nucléaire**
Führungseinrichtung für das Kontrollbündel eines Kernreaktors
Guiding device for the control-rod cluster of a nuclear reactor

(30) Priorité: 20.09.1990 FR 9011614
(43) Date de publication de la demande: 25.03.1992
(73) Titulaire: FRAMATOME, 92400 Courbevoie (FR)
(72) Inventeur: Barbe, Gérard, F-92500 Rueil Malmaison (FR)
(74) Mandataire: Fort, Jacques

(56) Documents cités:
- EP-A- 0 329 536
- EP-A- 0 363 710
- FR-A- 2 397 043
- FR-A- 2 399 715

## Description

La présente invention a pour objet un dispositif de guidage de grappe de contrôle de réacteur nucléaire et elle trouve une application particulièrement importante dans les réacteurs à eau sous pression et, parmi ces derniers, dans les réacteurs à neutrons thermiques ou à variation de spectre.

Dans les réacteurs à eau sous pression actuels, la réactivité est commandée notamment à l'aide de grappes de contrôle comprenant chacune un faisceau de crayons suspendus à une araignée à bras radiaux portée par une tige verticale de commande de la grappe, permettant de déplacer la grappe entre une position basse où elle est insérée à peu près complètement dans le coeur du réacteur et une position haute où elle se trouve dans des équipements internes supérieurs du réacteur.

Les crayons sont guidés dans le coeur par des tubes-guides prévus dans les assemblages combustibles. Au-dessus du coeur, ces crayons, très longs et minces, doivent être guidés dans les équipements internes supérieurs par un dispositif qui comprend habituellement : une enveloppe tubulaire, munie à sa partie supérieure d'une plaque de fermeture percée d'un trou de passage de la tige de commande ; des plaques horizontales réparties le long de l'enveloppe et découpées de façon à livrer passage à l'araignée et à guider les crayons ; des moyens de guidage continu des crayons dans la partie basse de l'enveloppe, constitués par des tubes de guidage de crayons individuels et éventuellement des fourreaux de guidage de paires de crayons présentant chacun une fente de largeur suffisante pour livrer passage à un bras de l'araignée, dans les intervalles compris entre les plaques les plus basses, destinés à soustraire les crayons à l'action de l'écoulement turbulent du réfrigérant qui sort du coeur et est dévié vers des ouvertures de sortie de réfrigérant percées dans l'enveloppe et situées dans lesdits intervalles et à éviter le flambage des crayons lorsque la grappe est libérée et tombe en étant freinée par l'effet de dash-pot des tubes-guides.

Jusqu'ici, on a cherché à réduire le plus possible les gradients de pression qui s'exercent sur les crayons dans le sens horizontal, dans les intervalles mentionnés plus haut, en partant de l'hypothèse que ces gradients de pression appliquent le crayon contre les lèvres de la fente de passage de l'araignée et provoquent une usure par frottement du crayon. Pour réaliser cet équilibrage, on a en particulier pratiqué des trous d'équilibrage de pression dans la paroi des fourreaux de guidage, remplacé les fourreaux par des carters laissant un jeu d'équilibrage des pressions (FR-A-2 547 100) et pratiqué, dans les lèvres de la fente, des échancrures constituant des ouvertures d'équilibrage (FR-A-2 516 691).

La présente invention part de la constatation que, dans certains types de réacteurs au moins, la cause prépondérante d'usure des crayons et des plaques est constituée par une vibration des crayons excitée par des oscillations de pression au sein de l'écoulement.

Pour réduire cette excitation, l'invention propose notamment un dispositif de guidage du type ci-dessus défini conforme à la partie caractérisante de la revendication 1.

Les ouvertures sont avantageusement de forme rectangulaire. Elles se terminent vers le haut au niveau des plaques transversales, ce qui évite des retournements locaux des veines fluides et diminue les oscillations de pression.

Le bord interne des fourreaux guidant deux crayons portés par un même bras est avantageusement profilé pour diminuer la vitesse d'écoulement entre les fourreaux et donc l'intensité des fluctuations de pression. Ces fourreaux sont avantageusement démunis de lumières de passage de fluide réfrigérant à leur partie haute, afin de générer des différences de pression plaquant les crayons placés les plus près de l'axe de l'enveloppe et d'éviter leur entraînement par le fluide réfrigérant.

Les dispositifs de guidage connus comportent généralement un guide conique ou "tulipe" évasé vers le bas, placé au-dessus de la plaque de fermeture 'de l'enveloppe et destiné à centrer la tige de commande de la grappe lors de la fermeture du couvercle de la cuve du réacteur. Les différences de pression qui apparaissent lors du fonctionnement entre les deux faces de la plaque de fermeture de l'enveloppe provoquent un écoulement turbulent dans le jeu annulaire qui subsiste entre la paroi du trou de la plaque et la tige. Cet écoulement turbulent, ascendant ou descendant suivant le cas, provoque des excitations de la tige, notamment dans le cas d'un débit ascendant qui subit un double changement de direction provoqué par le guide conique. Ces excitations sont transmises aux crayons par l'araignée. Les vibrations qui en résultent provoquent une usure supplémentaire de la partie haute des crayons, qui viennent frapper les plaques horizontales de guidage.

La présente invention vise, à titre secondaire, à réduire également les vibrations ayant cette origine et cette cause de corrosion et pour cela elle propose de ménager, dans le guide conique, des ouïes en forme de fentes régulièrement réparties angulairement, avantageusement allongées dans le sens longitudinal, facilitant l'écoulement ascendant du fluide réfrigérant, notamment en évitant un double changement de direction et une accélération.

L'invention sera mieux comprise à la lecture de la description qui suit d'un mode particulier de réalisation, donné à titre d'exemple non limitatif, et de la comparaison qui en est faite avec un dispositif de guidage selon l'art antérieur. La description se réfère aux dessins qui l'accompagnent, dans lesquels :
la figure 1 montre un dispositif de guidage de grappes de type connu, en élévation, et les éléments des internes supérieurs qui lui sont directement associés, en coupe suivant un plan vertical ;
la figure 2, similaire à la figure 1, est une vue en élévation dont le dispositif de guidage selon un mode particulier de réalisation de l'invention ;
la figure 3 est une vue en coupe, suivant un plan horizontal, au niveau des lignes III.III des figures 1 et 2, montrant, à la partie basse, une constitution connue de plaques de guidage et de fourreaux et, à la partie haute, une constitution suivant un mode particulier de réalisation de l'invention ;
les figures 4 et 5 sont des vues en élévation de fourreaux utilisables dans un dispositif selon l'invention, vus dans une direction orthogonale au plan défini par les deux crayons qu'ils guident ;
la figure 6 montre le guide conique d'un dispositif de guidage selon un mode particulier de réalisation de l'invention, représenté en coupe suivant un plan vertical.

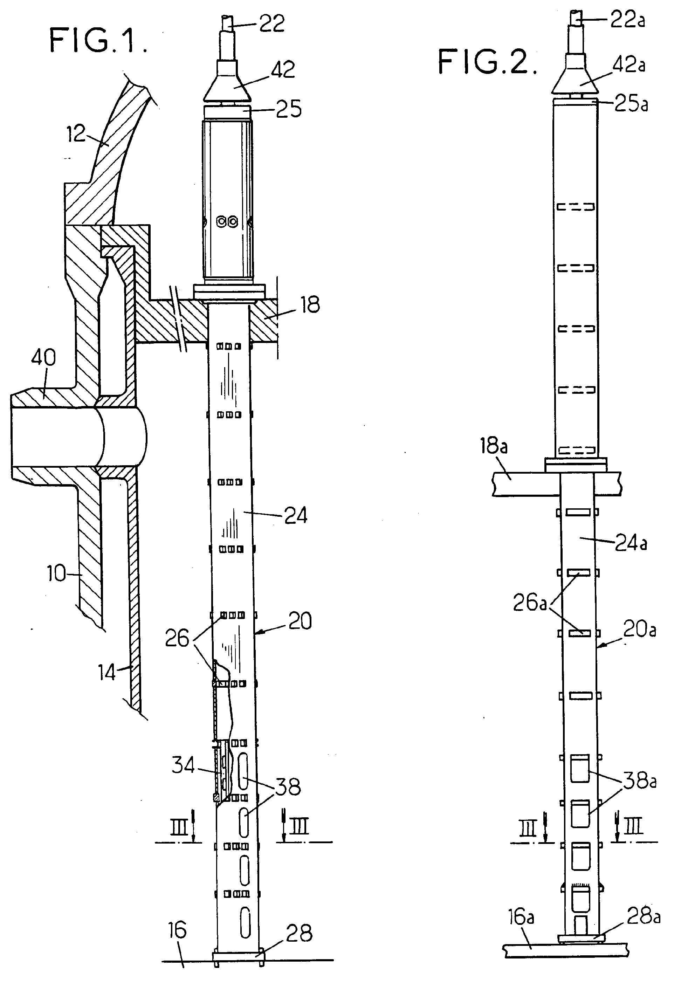

La fraction de réacteur schématisée en figure 1 a une constitution qui est, à l'heure actuelle, bien connue. Elle ne sera pour cette raison que brièvement décrite.

Le coeur, constitué d'assemblages combustibles juxtaposés, est contenu dans une cuve 10 de résistance à la pression, fermée par un couvercle 12. Une virole 14, supportée par la cuve, délimite un espace annulaire de descente du réfrigérant, admis par des tubulures non représentées, jusqu'à un espace ménagé sous une plaque inférieure, portant le coeur. Le réfrigérant remonte ensuite à travers le coeur, et en sort par des passages ménagés dans une plaque de coeur 16 appartenant aux internes supérieurs du réacteur.

Les internes comportent également une plaque support 18, soutenue par la cuve, reliée à la plaque de coeur par des colonnes de fixation non représentées et'par des dispositifs de guidage 20, destinés chacun à recevoir une grappe de contrôle. Les grappes sont constituées d'un faisceau de crayons allongés contenant du matériau absorbant les neutrons, au nombre de 24 par exemple, suspendus à une araignée dont le pommeau est fixé à une tige de commande 22.

Chaque dispositif 20 comporte, entre les plaques 16 et 18, une enveloppe tubulaire 24, de section approximativement carrée et, au-dessus de la plaque support 18, un prolongement muni d'une plaque de fermeture ou de logement 25, perçée d'un trou de passage de la tige de commande 22. Des plaques horizontales de guidage 26 sont réparties régulièrement le long de l'enveloppe 24. Elles sont fixées à l'enveloppe par engagement de saillies externes de ces plaques dans des encoches de l'enveloppe 24, et généralement par soudage.

Les plaques 26 situées à la partie supérieure de l'enveloppe 24, au nombre de six dans le mode de réalisation montré en figure 1, présentent une découpe interne telle que les plaques guident les crayons et livrent passage aux bras de l'araignée. Les crayons sont ainsi guidés de façon discontinue, à intervalles correspondant à l'écartement des plaques 26.

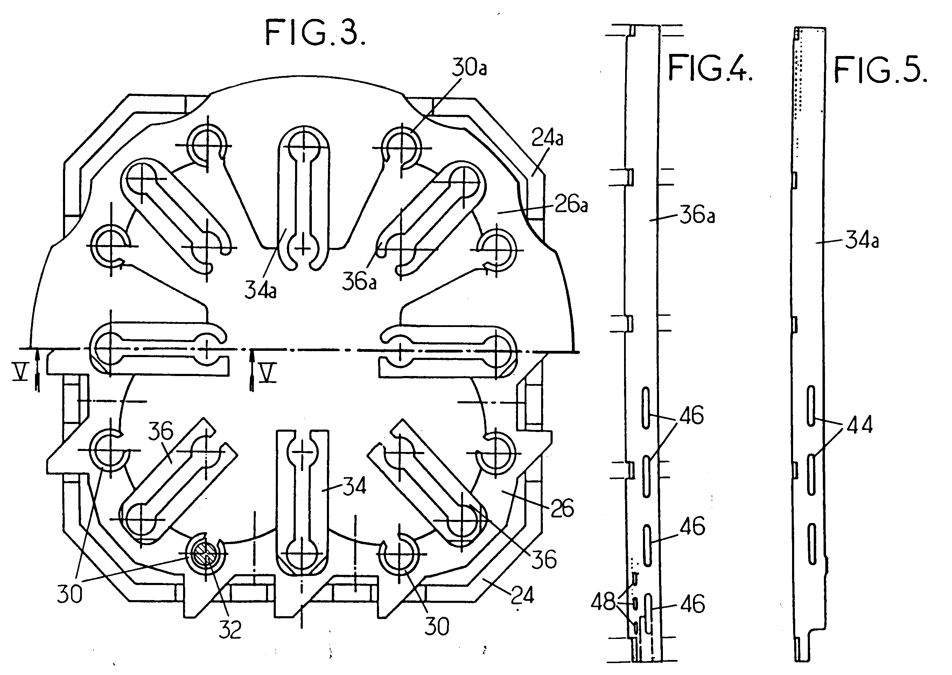

Les plaques inférieures, au nombre de quatre dans le mode de réalisation de la figure 1, sont reliées entre elles et au pied 28 de l'enveloppe 24 par des moyens de guidage continu, et à l'enveloppe par soudure. Comme le montre la figure 3, ces moyens de guidage sont constitués par des tubes fendus 30, destinés chacun à recevoir un crayon, tel que celui schématisé en 32, et des fourreaux 34 et 36 destinés chacun à guider une paire de crayons portés par un même bras de l'araignée.

Des ouvertures 38 allongées dans le sens vertical sont prévues dans l'enveloppe 24, dans les zones de guidage continu. Ces ouvertures 38 permettent au fluide réfrigérant provenant du coeur de passer dans le collecteur délimité par les plaques 16 et 18 et par la virole 14 et, de là, de sortir du réacteur par des tubulures 40.

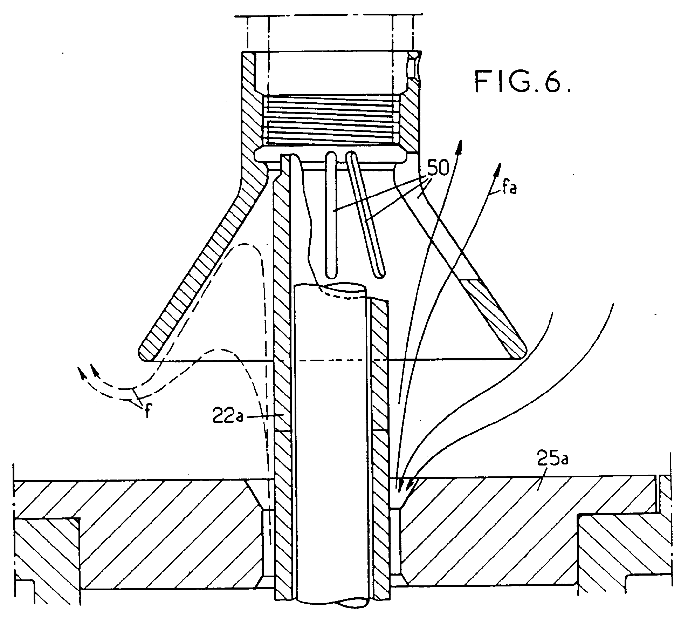

Enfin, le dispositif de guidage comporte un guide conique 42 destiné à centrer la tige de commande 22, lorsqu'on met en place le couvercle 12 de la cuve.. En général, les pressions ne sont pas équilibrées de part et d'autre de la plaque de fermeture 25, ce qui provoque un écoulement turbulent dans le jeu annulaire, entre la paroi du trou de la plaque, et la tige 22. Ce débit peut être ascendant ou descendant. Lorsqu'il est ascendant, il constitue un jet, qui, avant de se diffuser, subit un double retournement, comme indiqué par les flêches en tiret f sur la figure 6. La turbulence d'un tel écoulement provoque des excitations importantes de la tige qui se communiquent aux crayons par l'araignée.

Le dispositif de guidage selon l'invention, dont la constitution est montrée en figure 2, permet de réduire notablement les phénomènes d'usure dûs aux vibrations des crayons.

Le dispositif de la figure 2, où les éléments correspondant à ceux de la figure 1 portent les mêmes numéros de référence affectés de l'indice a, peut souvent être substitué à celui de la figure 1 dans un réacteur existant. Il comprend encore une enveloppe 20a à laquelle sont fixées des plaquas horizontales de guidage 26a. Les quatre plaques inférieures 26a et le pied 28a du dispositif sont encore reliées par des moyens de guidage continu, constitués de tubes 30a et de fourreaux 34a et 36a (partie haute de la figure 3) qui traversent les plaques, et à l'enveloppe 24a par soudure.

Comme le montre la figure 2, les ouvertures 38a sont de forme approximativement rectangulaire et placées juste au-dessous des plaques 26a de la zone de guidage continu. Dans le cas particulier montré en figure 2, chaque ouverture 38a va même jusqu'à la plaque 26a placé au-dessus.

Pour mieux répartir le débit qui sort du coeur entre les ouvertures 38a superposées, on constitue les trois plaques les plus hautes de la zone de guidage continu; de façon qu'elles aient une section de passage du fluide 'réfrigérant plus faible que la section de passage offerte par la plaque la plus basse. Pour cela, la périphérie interne des trois plaques supérieures peut avoir la découpe montrée à la partie haute de la figure 3, tandis que la plaque la plus basse conserve la découpe habituelle, montrée à la partie basse de la figure 3. On voit que la section de passage est réduite en prolongeant la plaque vers l'intérieur le long des quatre fourreaux 34a, placés à 90 ° les uns des autres.

Pour diminuer la vitesse d'écoulement entre les fourreaux et les fluctuations de pression, le bord interne des fourreaux, dans le sens radial, est avantageusement arrondi, comme le montre la figure 3.

Pour créer une pression différentielle qui plaque les crayons contre la paroi, chacun des tubes fendus présente une paroi démunie d'orifice autre que la fente. Les fourreaux 34a sont démunis de lumière dans leur partie supérieure, au-dessus de la seconde plaque, seules subsistant trois lumières allongées 44 (figure 5). Les fourreaux 36a ne comportent eux aussi des lumières 46 qu'à leur partie inférieure. Ces lumières pouvant être complétées par deux jeux de 3 trous 48 alignés, à la partie basse des fourreaux et à proximité de la fente.

Toutes ces dispositions réduisent notablement les risques de vibrations provoquées par l'écoulement le long des crayons eux-mêmes.

Pour réduire les vibrations induites par l'écoulement le long de la tige de commande 22, des ouïes 50 en forme de fente sont ménagées dans le guide conique 42 pour faciliter l'écoulement ascendant du fluide réfrigérant. Ces ouïes 50 peuvent avoir la forme de fentes régulièrement réparties angulairement, allongées dans le sens longitudinal, ménagées à la partie haute du guide. Ainsi, l'écoulement ascendant s'effectuer comme indiqué par les flêches fa, sur la figure 6. On peut notamment utiliser seize ouïes 50 dont trois seulement sont schématisées sur la figure 6.

## Revendications

1. Dispositif de guidage de grappe de contrôle de réacteur nucléaire, ladite grappe comprenant un faisceau de crayons suspendus à une araignée à bras radiaux portée par une tige verticale de commande de la grappe, permettant de déplacer la grappe entre une position basse où elle est insérée à peu près complètement dans le coeur du réacteur et une position haute où elle se trouve dans des équipements internes supérieurs du réacteur,
comprenant : des tubes-guides prévus dans les assemblages combustibles ; une enveloppe tubulaire (24a), munie à sa partie supérieure d'une plaque de fermeture (25a), percée d'un trou de passage de la tige de commande (22a) ; des plaques horizontales de guidage (26a) réparties le long de l'enveloppe et découpées de façon à livrer passage à l'araignée et à guider les crayons ; des moyens de guidage continu des crayons dans la partie basse de l'enveloppe, constitués par, des tubes (30a) de guidage de crayons individuels et éventuellement des fourreaux (34a,36a) de guidage de paires de crayons présentant chacun une fente de largeur suffisante pour livrer passage à un bras de l'araignée dans les intervalles compris entre les plaques horizontales (26a) les plus basses, destinés à soustraire les crayons à l'action de l'écoulement turbulent du réfrigérant qui sort du coeur et est dévié vers des ouvertures de sortie de réfrigérant (38a) percées dans l'enveloppe et situées dans lesdits intervalles,
caractérisé en ce que : les ouvertures (38a) arrivent jusqu'au niveau de la plaque (26a) placée au dessus, en haut de chaque intervalle ; les tubes (30a) destinés à guider chacun un seul crayon sont démunis d'ouverture autre que la fente, de façon à faire apparaître une pression différentielle qui plaque les crayons contre le tube et évite leur entraînement par le fluide réfrigérant s'écoulant vers les ouvertures ; et la plaque horizontales de guidage (26a) la plus basse, située au dessus d'un pied (28a) du tube guide, a une découpe telle qu'elle offre au fluide réfrigérant une section de passage supérieure à celle des plaques horizontales de guidage placées au-dessus et délimitant lesdits intervalles.

2. Dispositif selon la revendication 1, caractérisé en ce que le bord interne des fourreaux (34a,36a) guidant deux crayons portés par un même bras est profilé pour diminuer la vitesse d'écoulement entre les fourreaux.

3. Dispositif selon la revendication 1 , caractérisé en ce que les fourreaux (34a,36a) sont démunis de lumières de passage de fluide réfrigérant à leur partie haute.

4. Dispositif selon l'une quelconque des revendications précédentes, caractérisé en ce qu'il comporte un guide conique (42a) évasé vers le bas et placé au-dessus de la plaque (25a) de fermeture de l'enveloppe (24a), dans lequel sont ménagées des oules (50) en forme de fentes régulièrement réparties angulairement, avantageusement allongées dans le sens longitudinal, facilitant l'écoulement ascendant du fluide réfrigérant.

## Patentansprüche

1. Führungseinrichtung für ein Steuerstabbündel eines Kernreaktors, wobei das Bündel mehrere in einer Spinne mit radialen Armen aufgehangene Stäbe aufweist und die Spinne von einer vertikalen Steuerstange zur Steuerung des Bündels getragen wird, die es ermöglicht, das Bündel zwischen einer unteren Stellung, wo es ungefähr vollständig in den Reaktorkern eingetaucht ist und einer oberen Stellung zu bewegen, in der sich das Bündel in den oberen inneren Einrichtungen des Reaktors befindet, mit:
Führungsrohren, die in den Brennelementkassetten vorgesehen sind, einer rohrförmigen Hülle (24a), die an ihrem oberen Teil mit einer Verschlußplatte (25a) versehen ist, die eine Durchgangsöffnung für die Steuerstange (22a) aufweist, horizontale Führungsplatten (26a), die entlang der Hülle verteilt sind und so ausgeschnitten sind, daß sie der Spinne einen Durchgang ermöglichen und die Stäbe führen, Mittel zur ständigen Führung der Stäbe in dem unteren Teil der Hülle, die aus Führungsrohren (30a) für die einzelnen Stäbe bestehen und gegebenenfalls mit Führungshülsen (34a, 36a) für Paare von Stäben, die jeweils einen hinreichend breiten Schlitz aufweisen, um einem Arm der Spinne Durchgang zu verschaffen, in Abständen zwischen den niedrigsten horizontalen Platten (26a) und die dazu bestimmt sind, die Stäbe der Wirkung des turbulenten Flusses des Kühlmittels zu entziehen, welches aus dem Reaktorkern austritt und zu den Ausgangsöffnungen des Kühlmittels (38a) geführt ist, mit denen die Hülle versehen ist und die den erwähnten Abständen angeordnet sind,
**dadurch gekennzeichnet,** daß
die Öffnungen (38a) bis auf die Höhe der Platte (26a) reichen, die oberhalb eines jeden Intervalls angeordnet ist, wobei die Rohre (30a) dazu bestimmt sind, jeweils einen einzigen Stab zu führen und keine weitere Öffnung als den Schlitz aufweisen, derart, daß ein Differenzdruck auftritt, der die Stäbe gegen das Rohr drückt und deren Mitnahme durch den Kühlmittelfluß verhindert, der zu den Öffnungen strömt, und dadurch, daß die niedrigste horizontale Führungsplatte (26a), die oberhalb eines Fußes (28a) des Führungsrohrs angeordnet ist, so geschnitten ist, daß sie den Kühlmittelfluß einen größeren Durchgangsquerschnitt liefert als die darüber angeordneten horizontalen Führungsplatten, die die besagten Intervalle eingrenzen.

2. Einrichtung nach Anspruch 1, dadurch gekennzeichnet, daß der innere Rand der Hülse (34a, 36a), der zwei Stäbe führt, die von demselben Arm getragen werden, ein Profil aufweist, welches die Durchflußgeschwindigkeit zwischen den Hülsen vermindert.

3. Einrichtung nach Anspruch 1, dadurch gekennzeichnet, daß die Hülsen (34a, 36a) in ihrem oberen Bereich keine Durchgangsöffnungen für das Kühlmittel aufweisen.

4. Einrichtung nach einem der vorstehenden Ansprüche, gekennzeichnet durch ein konisches Führungsorgan (42a), welches sich nach unten öffnet und oberhalb der Abschlußplatte (25a) der Hülle (24a) angeordnet ist, und in dem mit gleichem Winkelabstand verteilte schlitzförmige Einlaßöffnungen (50) angeordnet sind, die vorzugsweise in Längsrichtung orientiert sind und den aufsteigenden Kühlmittelfluß erleichtern.

## Claims

1. Device for guiding a nuclear reactor control cluster, said cluster comprising a bundle of elements suspended from radial arms of a spider carried by a vertical cluster drive shaft, enabling to move the cluster between a lower position in which it is almost completely inserted in the reactor core and an upper position in which it is situated in upper internals of the reactor,
comprising: guide tubes provided in the fuel assemblies ; a tubular casing (24a) having, at its upper part, a closure plate (25a) formed with a central hole for the drive shaft (22a) ; horizontal guide plates (26a) distributed along the casing and cut out so as to let the spider pass and to guide the elements ; means for continuously guiding the elements in the lower part of the casing, constituted by tubes (30a) for guiding individual elements and possibly sleeves (34a-36a) each for guiding a pair of elements, each formed with a slit of sufficient width to allow one arm of the spider to pass in the intervals between the lowest horizontal plates (26a), intended to protect the elements against the action of the turbulent flow of coolant which leaves the core and which is deflected towards coolant outlet openings (38a) formed in the casing and situated in said intervals,
characterized in that: the openings (38a) terminate at the level of the plate (26a) located above them, at the top of each interval ; the tubes (30a) each for guiding a single element are devoid of opening other than the slit, so as to generate a pressure differential which applies the elements against the tube and prevents them from being driven by the coolant which flows toward the openings ; and the lowest horizontal guiding plate (26a), located above a foot (28a) of the guide tube has such a cut-out that it gives to the coolant a flow cross-sectional area greater than that of the horizontal guide plates placed above and defining said intervals.

2. Device according to claim 1, characterized in that the internal edges of the sleeves (34a-34b) guiding two elements carried by a same arm is streamlined to reduce the flow speed between the sleeves.

3. Device according to claim 1, characterized in that the sleeves (34a,36a) are devoid of coolant passages in their upper part.

4. Device according to any one of the preceding claims, characterized in that it comprises a conical guide (42a), flaring out downwardly and placed above the closure plate (25a) of the casing (24a), in which are formed apertures (50) in the form of slots spaced evenly angularly apart, preferably elongated in the longitudinal direction, for easier upward flow of the coolant.
